# EUROPEAN PATENT APPLICATION

(11) **EP 4 557 565 A1**
(43) Date of publication of application: **21.05.2025**
(21) Application number: 24201401.7
(22) Date of filing: 19.09.2024
(51) Int. Cl.: H02J 7/00, B62B 3/14

(54) **SHOPPING CART, CHARGING METHOD AND STORAGE MEDIUM**

(30) Priority: 16.11.2023 JP 2023194804
(71) Applicant: Toshiba TEC Kabushiki Kaisha, Tokyo 141-8562 (JP)
(72) Inventor: Takeda, Kenta, Tokyo, 141-8562 (JP)
(74) Representative: Bandpay & Greuter

(57) **Abstract**

A shopping cart includes an attachment to which a mobile terminal is attachable, a battery, a power transmitter electrically connectable to the mobile terminal attached to the attachment and configured to transmit electric power supplied from the battery to the mobile terminal, a switch connected between the battery and the power transmitter, and a processor configured to determine a state of the mobile terminal attached to the attachment and turn on or off the switch to control supply of the electric power from the battery to the power transmitter based on the determined state of the mobile terminal.

## Description

### FIELD

Embodiments described herein relate generally to a shopping cart, a charging method, and a storage medium.

### BACKGROUND

Among mobile objects, such as carts (hereinafter referred to as shopping carts), used in stores such as supermarkets and retailers, there is a shopping cart to which a mobile terminal of a customer can be attached.

With such a shopping cart, it is possible to smoothly perform registration and payment of items to be purchased by installing a dedicated application in advance in the mobile terminal of the customer.

On the other hand, whether shopping using the shopping cart as described above proceeds smoothly depends on the state (e.g., the remaining battery charge) of the mobile terminal in which the application is installed. For example, when the battery of the mobile terminal runs out and the application cannot be used, shopping cannot be done smoothly.

The related-art technology described above proposes a configuration in which a portable terminal can be charged while being placed in a holder for holding the portable terminal. With this configuration, however, a customer needs to bring a battery, and there is room for improvement in terms of convenience.

### SUMMARY OF THE INVENTION

Embodiments of the present invention provide a shopping cart, a charging method, and a storage medium capable of charging a mobile terminal.

According to an embodiment, a shopping cart comprises an attachment to which a mobile terminal is attachable; a battery; a power transmitter electrically connectable to the mobile terminal attached to the attachment and configured to transmit electric power supplied from the battery to the mobile terminal; a switch connected between the battery and the power transmitter; and a processor configured to determine a state of the mobile terminal attached to the attachment and turn on or off the switch to control supply of the electric power from the battery to the power transmitter based on the determined state of the mobile terminal.

The present invention also relates to a charging method performed by a controller of a shopping cart according to appended claims.

The method may further comprise the following features :
- In determining the state of the mobile terminal, whether a predetermined application is installed in the mobile terminal is determined, a step of turning on the switch to supply the electric power from the battery to the power transmitter when the predetermined application is installed in the mobile terminal and.
- A step of causing a display device of the mobile terminal to display a screen prompting to install the predetermined application in the mobile terminal when the predetermined application is not installed in the mobile terminal.
- In determining the state of the mobile terminal, whether a predetermined application installed in the mobile terminal is running is determined, and turning on the switch to supply the electric power from the battery to the power transmitter when the predetermined application is running.
- A step of causing a display device of the mobile terminal to display a screen prompting to start the predetermined application when the predetermined application is not running.
- A step of causing a display device of the mobile terminal to display a charging state indicating whether charging of the mobile terminal is started, not started, or stopped.

### BRIEF DESCRIPTION OF THE DRAWINGS

FIG. 1 is a side view of a configuration of a shopping cart according to an embodiment.
FIG. 2 is a schematic diagram illustrating a configuration of an attachment of the shopping cart according to the embodiment.
FIG. 3 is a block diagram illustrating hardware configurations of the shopping cart and a mobile terminal according to the embodiment.
FIG. 4 is a diagram illustrating a functional configuration of a controller according to the embodiment.
FIG. 5 is a flowchart illustrating a process of charging of a mobile terminal according to the embodiment.
FIG. 6 is a flowchart illustrating a process of charging a mobile terminal according to a first variation.
FIG. 7 is a flowchart illustrating a process of charging a mobile terminal according to a second variation.

### DETAILED DESCRIPTION

Hereinafter, a shopping cart, a charging method, and a storage medium according to an embodiment will be described with reference to the drawings. However, the present invention is not limited by the embodiment described below. Moreover, various omissions, substitutions, changes, and combinations of components can be made without departing from the scope of the embodiment described below.

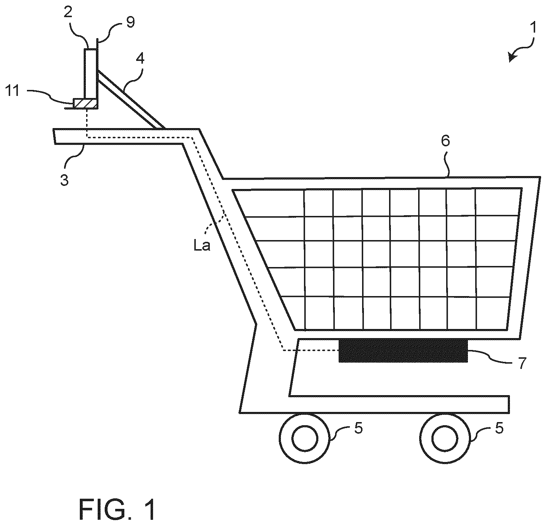

FIG. 1 is a side view illustrating an example of a configuration of a shopping cart 1 according to the embodiment. As illustrated in FIG. 1, the shopping cart 1 includes a handle 3, a support 4, casters 5, a container 6, a battery 7, an attachment 9, a power transmitter 11, and a connection cable La. A mobile terminal 2 is attachable to the attachment 9.

The shopping cart 1 is an example of a mobile object and is provided in a store such as a supermarket. The shopping cart 1 is a device used by a customer to store items to be purchased while moving in a store. The shopping cart 1 is pushed and moved by the customer inside of the store.

The mobile terminal 2 is a device, such as a smartphone. The mobile terminal 2 is detachably attachable to the attachment 9. Specifically, the mobile terminal 2 is owned by the customer. For example, an application program for performing registration and payment of items to be purchased is installed in the mobile terminal 2. Hereinafter, this application program is also referred to as a purchase application. The mobile terminal 2 is used for shopping in the store. The mobile terminal 2 may be a tablet terminal. Furthermore, the mobile terminal 2 may be lent to the customer by the store.

The mobile terminal 2 is charged by receiving electric power supplied from the shopping cart 1 (or the battery 7) via the attachment 9. Specifically, the mobile terminal 2 is electrically connected to the battery 7 by connecting a power receiver 21 of the mobile terminal 2, which will be described later, to the power transmitter 11 of the attachment 9 via a connection cable Lb.

The handle 3 is a component that the customer grips when moving the shopping cart 1. The support 4 is provided, for example, on the handle 3 and supports the attachment 9.

The casters 5 serve as points of contact of the shopping cart 1 with the ground. The casters 5 are examples of wheels. The container 6 has a cage-like shape with an upper opening and stores items such that the items can be visually recognized from the outside. The shopping cart 1 does not need to include the container 6 in itself and may include, for example, a basket receiver for receiving a shopping basket as the container 6.

The battery 7 is a rechargeable secondary battery. The battery 7 stores electric power supplied from an external power source via a power supply unit (not shown) and supplies the stored electric power to, for example, the mobile terminal 2 mounted on the shopping cart 1.

The attachment 9 is a holder for holding the mobile terminal 2 and thereby fixing the mobile terminal 2 to the shopping cart 1. Specifically, the attachment 9 has, for example, a substantially rectangular shape and is fixed to the shopping cart 1 by the support 4. Note that the shape of the attachment 9 is not limited to a substantially rectangular shape and may be any shape that can hold the mobile terminal 2.

The power transmitter 11 is a terminal provided on the attachment 9. Specifically, the power transmitter 11 electrically connects the battery 7 to the mobile terminal 2 by connecting the mobile terminal 2 to the connection cable La via the power receiver 21 and the connection cable Lb which will be described later. This makes it possible to charge the mobile terminal 2 with the electric power of the battery 7.

Note that the configuration of the shopping cart 1 is not limited to the example illustrated in FIG. 1. For example, the shopping cart 1 may include an imaging device and a weight sensor to which electric power is supplied by the battery 7.

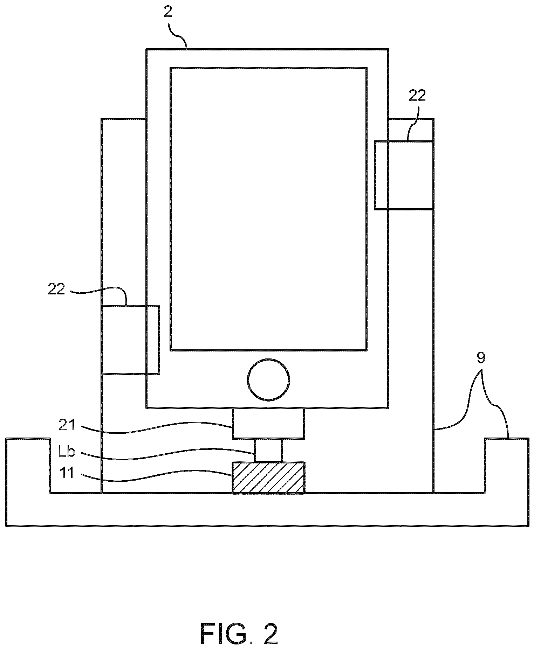

Next, the attachment 9 will be described in detail with reference to FIG. 2. FIG. 2 is a schematic diagram illustrating an example of the configuration of the attachment 9 of the shopping cart 1 according to the embodiment. Note that FIG. 2 illustrates a state in which the mobile terminal 2 is attached to the attachment 9.

The attachment 9 holds the mobile terminal 2. The attachment 9 includes an edge holder 22 for holding the left and right edges of the mobile terminal 2 and the power transmitter 11. The power receiver 21 is a connection terminal of the mobile terminal 2. Specifically, the power receiver 21 is electrically connected to the power transmitter 11 via the connection cable Lb.

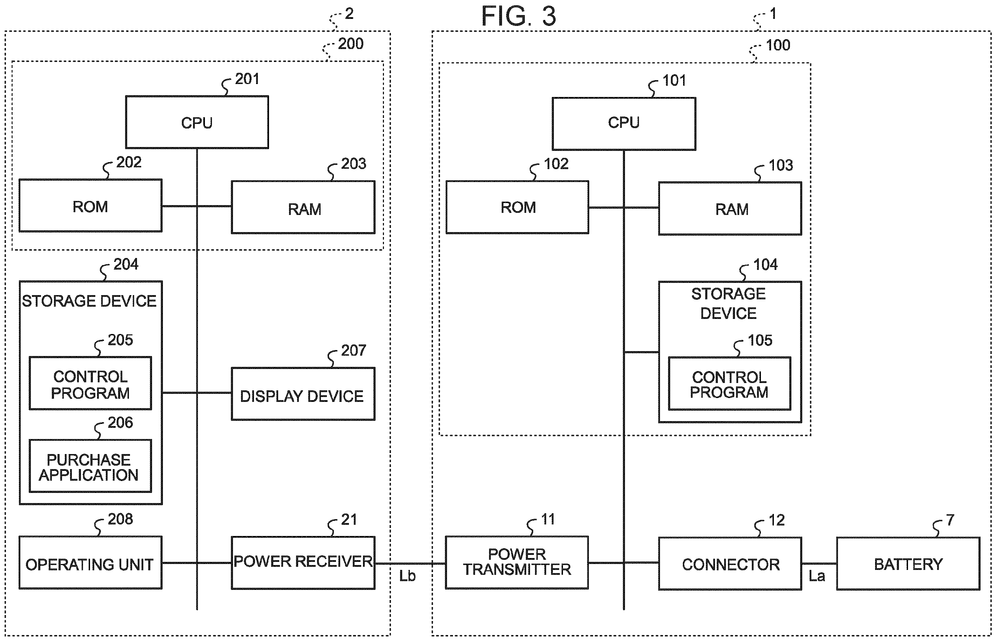

When the mobile terminal 2 is attached to the attachment 9, the power receiver 21 of the mobile terminal 2 and the power transmitter 11 of the attachment 9 are electrically connected to each other via the connection cable Lb. As shown in FIG. 3, the battery 7 is electrically connected to the power transmitter 11 via the connection cable La and a connector 12, which will be described later. With this configuration, the battery 7 is electrically connected to the power receiver 21, and the mobile terminal 2 can be charged.

Note that, although the power transmitter 11 and the power receiver 21 are electrically connected to each other via the connection cable Lb, the power transmitter 11 and the power receiver 21 may be directly connected to each other without using the connection cable Lb. For example, the power receiver 21 of the mobile terminal 2 and the power transmitter 11 of the attachment 9 may be wirelessly connected to each other.

Next, hardware configurations of the shopping cart 1 and the mobile terminal 2 will be described with reference to FIG. 3. FIG. 3 is a block diagram illustrating examples of hardware configurations of the shopping cart 1 and the mobile terminal 2 according to the embodiment. As illustrated in FIG. 3, the shopping cart 1 includes a controller 100, which includes a Central Processing Unit (CPU) 101, a Read Only Memory (ROM) 102, a Random Access Memory (RAM) 103, and a storage device 104, the battery 7, the power transmitter 11, and the connector 12. The storage device 104 stores a control program 105.

The CPU 101 is an example of a processor and controls operations of the battery 7, the power transmitter 11, and the connector 12 related to the charging of the battery 7. The ROM 102 stores various programs. The RAM 103 is a workspace into which programs and various types of data are loaded. The CPU 101, the ROM 102, and the RAM 103 are connected to each other via a bus, and the CPU 101, the ROM 102, the RAM 103, and the storage device 104 constitute the controller 100 of the shopping cart 1.

The storage device 104 is implemented by a non-volatile memory, such as a Hard Disc Drive (HDD) or a flash memory, that retains programs and data even when power is turned off. The storage device 104 stores the control program 105 for controlling the shopping cart 1.

The mobile terminal 2 includes the power receiver 21, a CPU 201, a ROM 202, a RAM 203, a storage device 204, a display device 207, and an operating unit 208. The storage device 204 stores a control program 205 and a purchase application 206.

The CPU 201 is an example of a processor and controls the components of the mobile terminal 2. The ROM 202 stores various programs. The RAM 203 is a workspace into which programs and various types of data are loaded. The storage device 204 stores various programs.

The CPU 201, the ROM 202, the RAM 203, and the storage device 204 are connected to each other via a bus. Here, the CPU 201, the ROM 202, and the RAM 203 constitute the controller 200 of the mobile terminal 2. The controller 200 performs a control process in cooperation with the controller 100 of the shopping cart 1 by controlling the CPU 201 in accordance with a program stored in the ROM 202 or the storage device 204 and loaded into the RAM 203.

The storage device 204 is implemented by a non-volatile memory, such as a Hard Disc Drive (HDD) or a flash memory, that retains programs and data even when power is turned off. The storage device 204 stores the control program 205 and the purchase application 206. The control program 205 is for controlling the mobile terminal 2.

The purchase application 206 is for supporting registration and payment of items to be purchased. Specifically, the purchase application 206 registers items to be purchased via the operating unit 208 described later. In addition, the purchase application 206 supports the customer in purchasing items by displaying registered items on the display device 207 described later.

The display device 207 is, for example, a Liquid Crystal Display (LCD). The display device 207 displays various types of data under the control of the CPU 201. The operating unit 208 is a touch panel provided on the display device 207. The operating unit 208 outputs operations input via the touch panel to the CPU 201. The operating unit 208 may also include, for example, a keyboard and/or a pointing device. The operating unit 208 is an example of an input device.

The connector 12 is a connection interface to which the battery 7 and the power transmitter 11 are connected. In other words, the connector 12 is connected between the battery 7 and the power transmitter 11. For example, the connector 12 includes a switch that is switched on and off to start and stop the power supply from the battery 7 to the power transmitter 11 that is electrically connected to the battery 7 via the connector 12 and the connection cable La.

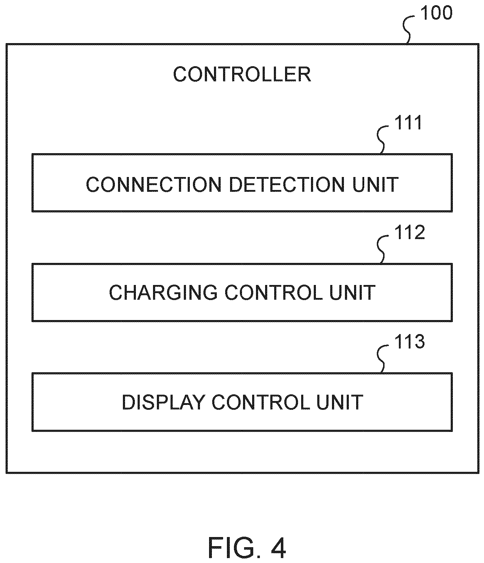

Next, the controller 100 of the shopping cart 1 will be described with reference to FIG. 4. FIG. 4 is a diagram illustrating an example of a functional configuration of the controller 100 according to the embodiment. As illustrated in FIG. 4, the controller 100 includes a connection detection unit 111, a charging control unit 112, and a display control unit 113 as functional components.

Specifically, the controller 100 (CPU 101) of the shopping cart 1 implements the above-described functional components by executing the control program 105 stored in the storage device 104 (or a non-transitory computer-readable storage medium). In the present embodiment, the above-described functional components are software components implemented by the cooperation between the processor and the program of the shopping cart 1. However, the present invention is not limited to this embodiment. For example, some or all of the above-described functional components may be implemented by dedicated circuits or the like.

The connection detection unit 111 is an example of a detection unit. When the mobile terminal 2 is connected to the power transmitter 11, the connection detection unit 111 outputs a detection signal to the CPU 101. Specifically, the connection detection unit 111 electrically detects, via the power transmitter 11, that the power receiver 21 of the mobile terminal 2 is connected to the power transmitter 11 and transmits a detection signal to the charging control unit 112 described later.

The charging control unit 112 controls the electric power supplied from the battery 7 to the power transmitter 11 in accordance with the state of the mobile terminal 2 attached to the attachment 9. Specifically, upon receiving the detection signal from the connection detection unit 111, the charging control unit 112 accesses the mobile terminal 2 via the power transmitter 11 to determine the remaining battery charge of the mobile terminal 2 as an example of a state of the mobile terminal 2.

When the remaining battery charge of the mobile terminal 2 is less than a preset threshold value, the charging control unit 112 determines that the mobile terminal 2 needs to be charged and turns on the connector 12 (or the switch of the connector 12) to start the power supply. Then, the charging control unit 112 notifies the display control unit 113 that the charging of the mobile terminal 2 is started. On the other hand, when the remaining battery charge of the mobile terminal 2 is not less than the preset threshold value, the charging control unit 112 determines that the charging of the mobile terminal 2 is unnecessary and turns off the connector 12 (or the switch of the connector 12). Then, the charging control unit 112 notifies the display control unit 113 that the charging of the mobile terminal 2 is not performed.

When the charging of the mobile terminal 2 is performed and the remaining battery charge of the mobile terminal 2 becomes greater than or equal to the preset threshold value, the charging control unit 112 determines to stop the charging of the mobile terminal 2 and turns off the connector 12. Then, the charging control unit 112 notifies the display control unit 113 that the charging of the mobile terminal 2 is stopped. For example, when the mobile terminal 2 is in the fully charged state, the charging is stopped. With this configuration, unnecessary power consumption of the battery 7 can be prevented.

Note that it is desirable to set the threshold value of the remaining battery charge based on the electric power with which the purchase application 206 can stably operate so as not to waste the electric energy stored in the battery 7 due to unnecessary charging of the mobile terminal 2.

The display control unit 113 displays a charging state of the mobile terminal 2 on the display device 207 of the mobile terminal 2. The charging state indicates, for example, whether the charging of the mobile terminal 2 is started, not started, or stopped. Specifically, when receiving notification indicating whether the charging is necessary from the charging control unit 112, the display control unit 113 causes the display device 207 to display a message indicating that the charging is started when the charging of the mobile terminal 2 is necessary, and causes the display unit 207 to display a message indicating that the charging of the mobile terminal 2 is not started when the charging is unnecessary, that is, when the remaining battery charge is sufficient.

In the present embodiment, the charging state is displayed on the display device 207 of the mobile terminal 2. However, the present invention is not limited to this embodiment, and the display of the charging state may be omitted. In this case, the display control unit 113 may be removed from the functional configuration of the controller 100.

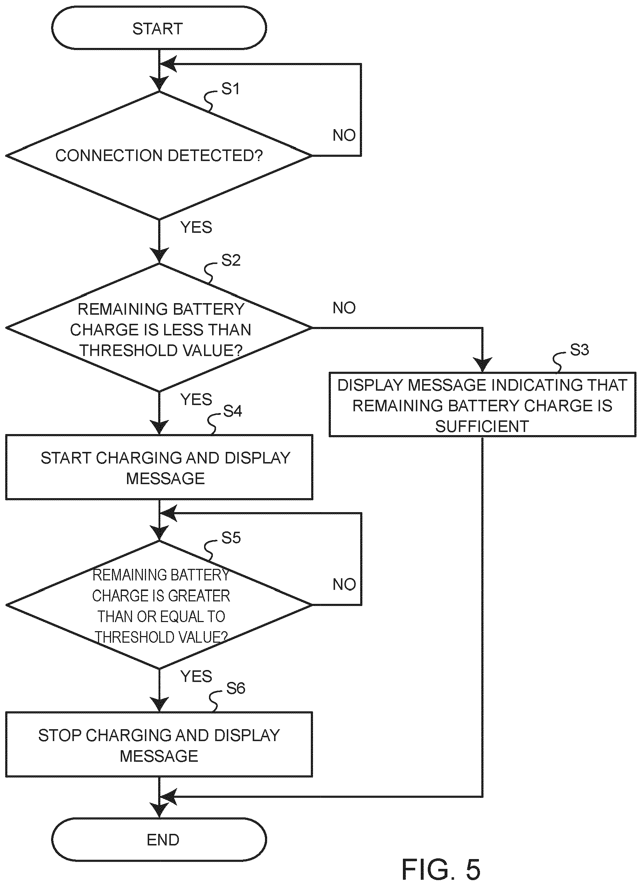

Next, a process of charging the mobile terminal 2 will be described with reference to FIG. 5. FIG. 5 is a flowchart illustrating an example of a process of charging the mobile terminal 2 according to the embodiment.

The connection detection unit 111 waits while the connection between the power transmitter 11 and the power receiver 21 is not detected (step S1: No). In other words, the connection detection unit 111 determines whether the mobile terminal 2 is connected to the power transmitter 11. When detecting the connection between the power transmitter 11 and the power receiver 21 (step S1: Yes), the connection detection unit 111 notifies the charging control unit 112 that the connection between the mobile terminal 2 and the battery 7 has been detected.

Next, upon receiving the notification from the connection detection unit 111, the charging control unit 112 determines the remaining battery charge of the mobile terminal 2 via the power receiver 21 (step S2). Here, when the remaining battery charge is not less than the preset threshold value (step S2: No), the charging control unit 112 turns off the connector 12. Then, the charging control unit 112 notifies the display control unit 113 that the remaining battery charge is sufficient. When receiving the notification, the display control unit 113 displays, on the display device 207, a message indicating that the charging of the mobile terminal 2 is not started because the remaining battery charge is sufficient (step S3), and ends the process.

On the other hand, when the remaining battery charge is less than the preset threshold value (step S2: Yes), the charging control unit 112 turns on the connector 12. Then, the charging control unit 112 notifies the display control unit 113 that the charging of the mobile terminal 2 is started. When receiving the notification, the display control unit 113 causes the display device 207 to display a message indicating that the charging is started (step S4).

Next, the charging control unit 112 determines the remaining battery charge of the mobile terminal 2 via the power receiver 21 (step S5). Here, when the remaining battery charge is less than the preset threshold value (step S5: No), step S5 is repeated. When the remaining battery charge is greater than or equal to the preset threshold value (step S5: Yes), the charging control unit 112 turns off the connector 12. Then, the charging control unit 112 notifies the display control unit 113 that the charging is stopped. When receiving the notification, the display control unit 113 causes the display device 207 to display a message indicating that the charging is stopped (step S6), and ends the process.

As described above, in the shopping cart 1 of the present embodiment, when it is detected that the mobile terminal 2 attached to the attachment 9 of the shopping cart 1 is connected to the battery 7, the remaining battery charge of the mobile terminal 2 is determined. When charging is necessary, the charging control unit 112 of the shopping cart 1 starts charging the mobile terminal 2. When charging is not necessary, the charging control unit 112 of the shopping cart 1 stops or does not start charging the mobile terminal 2. This configuration makes it possible to prevent unnecessary power consumption of the battery 7 while supplying sufficient power for using the purchase application installed in the mobile terminal 2, and thereby makes it possible to efficiently charge the mobile terminal 2.

In the above-described embodiment, instead of messages, any type of information may be displayed on the display device 207. Also, the above-described embodiment can be modified as appropriate by changing some of the configurations or functions of the above-described apparatuses. Below, some variations of the above-described embodiment will be described. In the descriptions below, differences from the above-described embodiment will be mainly discussed, and detailed descriptions of the same components and features as those described above will be omitted. Furthermore, the variations described below may be implemented individually or in any appropriate combination.

### (First Variation)

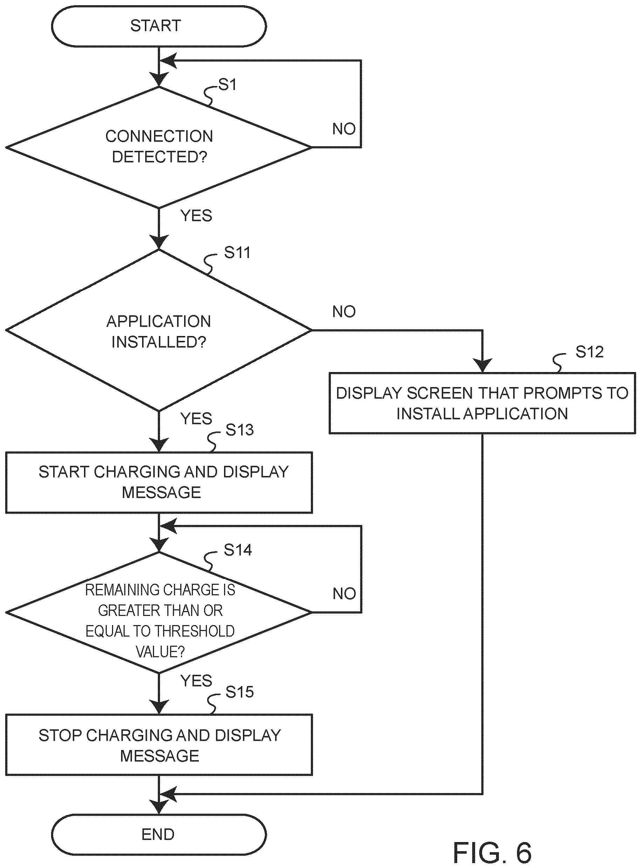

A first variation of the above-described embodiment will be described below. In the above-described embodiment, when the connection detection unit 111 detects the connection at step S2 in FIG. 5, it is determined whether the remaining battery charge of the mobile terminal 2 is less than the threshold value. In the first variation, before or after the execution of step S2, the connection detection unit 111 determines, as an example of a state of the mobile terminal 2, whether a purchase application is installed in the mobile terminal 2 and controls the charging of the mobile terminal 2 according to the determination result. A process of charging the mobile terminal 2 according to the first variation will be described below with reference to FIG. 6.

FIG. 6 is a flowchart illustrating a process of charging the mobile terminal 2 according to the first variation. Descriptions of steps that are the same as those in FIG. 5 will be omitted.

Upon receiving notification from the connection detection unit 111, the charging control unit 112 determines, via the power receiver 21, whether a purchase application is installed in the mobile terminal 2 (step S11). When the purchase application is not installed (step S11: No), the charging control unit 112 causes the display device 207 to display a screen prompting to install the purchase application (step S12), and ends the process.

When the purchase application is installed in the mobile terminal 2 (step S11: Yes), the charging control unit 112 turns on the connector 12. Next, the charging control unit 112 notifies the display control unit 113 that the charging of the mobile terminal 2 is started. When receiving the notification, the display control unit 113 causes the display device 207 to display a message indicating that the charging is started (step S13).

Next, the charging control unit 112 determines the remaining battery charge of the mobile terminal 2 via the power receiver 21 (step S14). When the remaining battery charge is less than the preset threshold value (step S14: No), step 14 is repeated. When the remaining battery charge is greater than or equal to the preset threshold value (step S14: Yes), the charging control unit 112 turns off the connector 12 and notifies the display control unit 113 that the charging is stopped. When receiving the notification, the display control unit 113 causes the display device 207 to display a message indicating that the charging is stopped (step S15), and ends the process.

As described above, in the shopping cart 1 of the first variation, whether the purchase application is installed is determined. When the purchase application is not installed, the charging of the mobile terminal 2 is not performed, and the installation of the application is prompted. With this configuration, the electric power of the battery 7 is not used for charging the mobile terminal 2 for the purpose unrelated to purchasing, and unnecessary electric power consumption of the battery 7 can be prevented. That is, the first variation makes it possible to efficiently charge the mobile terminal 2.

### (Second Variation)

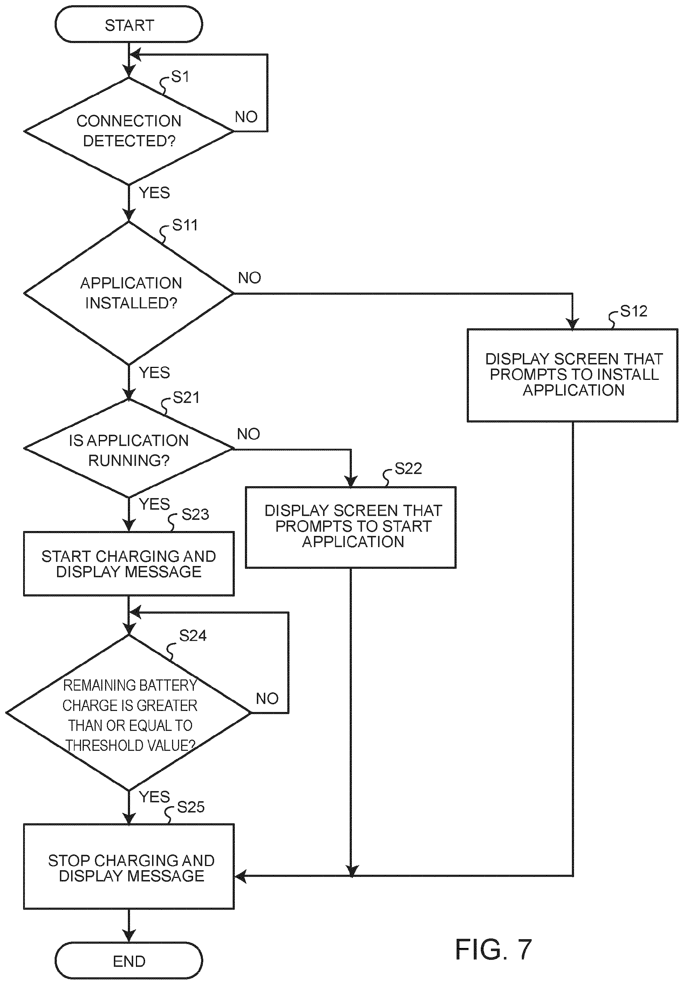

Next, a variation of the first variation is described as a second variation. In the first variation described above, when the purchase application is installed in the mobile terminal 2, the charging control unit 112 turns on the connector 12 at step S13 in FIG. 6. Then, the charging control unit 112 notifies the display control unit 113 that the charging of the mobile terminal 2 is started. When receiving the notification, the display control unit 113 displays a message indicating that the charging is started on the display device 207. In the second variation, when it is determined that the purchase application is installed, the charging control unit 112 determines, as an example of the state of the mobile terminal 2, whether the purchase application is running and controls the charging of the mobile terminal 2 according to the determination result. Below, with reference to FIG. 7, a process of charging the mobile terminal 2 according to the second variation will be described.

FIG. 7 is a flowchart illustrating an example of a process of charging the mobile terminal 2 according to the second variation. Descriptions of steps that are the same as those in FIGS. 5 and 6 will be omitted.

When the purchase application is installed in the mobile terminal 2 (step S11: Yes), the charging control unit 112 determines whether the purchase application is running (step S21). When the purchase application is not running (step S21: No), a screen prompting to start the purchase application is displayed on the display device 207 (step S22).

When the purchase application is running (step S21: Yes), the charging control unit 112 turns on the connector 12. Next, the charging control unit 112 notifies the display control unit 113 that the charging of the mobile terminal 2 is started. When receiving the notification, the display control unit 113 causes the display device 207 to display a message indicating that the charging is started (step S23).

Next, the charging control unit 112 determines the remaining battery charge of the mobile terminal 2 via the power receiver 21 (step S24). When the remaining battery charge is less than the preset threshold value (step S24: No), step S24 is repeated. When the remaining battery charge is greater than or equal to the preset threshold value (step S24: Yes), the charging control unit 112 turns off the connector 12. Next, the charging control unit 112 notifies the display control unit 113 that the charging is stopped. When receiving the notification, the display control unit 113 causes the display device 207 to display a message indicating that the charging is stopped (step S25), and ends the process.

As described above, in the shopping cart 1 of the second variation, it is determined whether the purchase application is running. When the purchase application is not running, the charging of the mobile terminal 2 is not performed, and the start of the purchase application is prompted. Thus, when the purchase application has been installed but has not been started, the second variation makes it possible to prevent the electric energy of the battery 7 from being used for charging the mobile terminal 2 for the purpose unrelated to purchasing. Therefore, in the shopping cart 1 of the second variation, unnecessary power consumption of the battery 7 can be prevented, and the charging of the mobile terminal 2 can be efficiently performed.

### (Third Variation)

A third variation of the above-described embodiment will be described below. At step S2 of FIG. 5, when receiving notification from the connection detection unit 111, the charging control unit 112 determines the remaining battery charge of the mobile terminal 2 via the power receiver 21. In the third variation, step S2 is omitted.

Specifically, when detecting that the power transmitter 11 is connected to the power receiver 21 (step S1: Yes), the connection detection unit 111 notifies the charging control unit 112 that the mobile terminal 2 is connected to the battery 7. Next, upon receiving the notification from the connection detection unit 111, the charging control unit 112 turns on the connector 12. Then, the charging control unit 112 notifies the display control unit 113 that the charging of the mobile terminal 2 is started. When receiving the notification, the display control unit 113 causes the display device 207 to display a message indicating that the charging is started (step S4).

As described above, in the shopping cart 1 of the third variation, the step of determining the remaining battery charge of the mobile terminal 2 is not performed. This makes it possible to charge the mobile terminal 2 regardless of the remaining battery charge of the mobile terminal 2. For example, this makes it possible to charge the mobile terminal 2 even when the remaining battery charge of the mobile terminal 2 is zero.

Programs executed by the shopping cart 1 according to the embodiment and the variations may be stored in a computer connected to a network, such as the Internet, and may be downloaded via the network. Furthermore, programs executed by the shopping cart 1 according to the embodiment and the variations may be provided or distributed via a network such as the Internet.

Programs executed by the apparatuses according to the above-described embodiment may be provided in advance in a ROM, a storage device, or the like. Programs executed by the apparatuses according to the above-described embodiment may be provided in a non-transitory computer-readable storage medium, such as a compact disc read-only memory (CD-ROM), a flexible disk (FD), a compact disc recordable (CD-R), or a digital versatile disk (DVD) in an installable format or an executable format.

Also, programs executed by the apparatuses according to the above-described embodiment may be stored in a computer connected to a network, such as the Internet, and may be downloaded via the network. Furthermore, programs executed by the apparatuses according to the above-described embodiment may be provided or distributed via a network such as the Internet.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims are intended to cover such forms or modifications as would fall within the scope of the disclosure.

## Claims

1. A shopping cart (1) comprising:
an attachment to which a mobile terminal is attachable;
a battery (7);
a power transmitter (11) electrically connectable to the mobile terminal attached to the attachment and configured to transmit electric power supplied from the battery to the mobile terminal;
a switch (12) connected between the battery and the power transmitter; and
a processor configured to determine a state of the mobile terminal attached to the attachment and turn on or off the switch to control supply of the electric power from the battery to the power transmitter based on the determined state of the mobile terminal.

2. The shopping cart according to claim 1, wherein
the processor is configured to determine whether the mobile terminal is connected to the power transmitter and turn on the switch to supply the electric power from the battery to the power transmitter when the mobile terminal is connected to the power transmitter.

3. The shopping cart according to claim 1, wherein
the processor is configured to determine whether a remaining battery charge of the mobile terminal is less than a preset threshold value and turn on the switch to supply the electric power from the battery to the power transmitter when the remaining battery charge is less than the preset threshold value.

4. The shopping cart according to claim 3, wherein
the processor is configured to turn off the switch to stop supplying the electric power from the battery to the power transmitter when the remaining battery charge becomes greater than or equal to the preset threshold value while the mobile terminal is being charged.

5. The shopping cart according to claim 1, wherein
the processor is configured to determine whether a predetermined application is installed in the mobile terminal and turn on the switch to supply the electric power from the battery to the power transmitter when the predetermined application is installed in the mobile terminal.

6. The shopping cart according to claim 5, wherein
the processor is configured to cause a display device of the mobile terminal to display a screen prompting to install the predetermined application in the mobile terminal when the predetermined application is not installed in the mobile terminal.

7. The shopping cart according to claim 1, wherein
the processor is configured to determine whether a predetermined application installed in the mobile terminal is running and turn on the switch to supply the electric power from the battery to the power transmitter when the predetermined application is running.

8. The shopping cart according to claim 7, wherein
the processor is configured to cause a display device of the mobile terminal to display a screen prompting to start the predetermined application when the predetermined application is not running.

9. The shopping cart according to any one of claims 1 to 8, wherein
the processor is configured to cause a display device of the mobile terminal to display a charging state indicating whether charging of the mobile terminal is started, not started, or stopped.

10. The shopping cart according to any one of claims 1 to 9, further comprising:
a handle on which the attachment is disposed; and
a basket under which the battery is disposed.

11. A charging method performed by a controller of a shopping cart including an attachment to which a mobile terminal is attachable, a battery, a power transmitter electrically connectable to the mobile terminal attached to the attachment and configured to transmit electric power from the battery to the mobile terminal, and a switch connected between the battery and the power transmitter, the charging method comprising:
determining a state of the mobile terminal attached to the attachment; and
turning on or off the switch to control supply of the electric power from the battery to the power transmitter based on the determined state of the mobile terminal.

12. The charging method according to claim 11, wherein
in determining the state of the mobile terminal, whether the mobile terminal is connected to the power transmitter is determined, and
the switch is turned on to supply the electric power from the battery to the power transmitter when the mobile terminal is connected to the power transmitter.

13. The charging method according to claim 11, wherein
in determining the state of the mobile terminal, whether a remaining battery charge of the mobile terminal is less than a preset threshold value is determined, and
the switch is turned on to supply the electric power from the battery to the power transmitter when the remaining battery charge is less than the preset threshold value.

14. The charging method according to claim 13, wherein
the switch is turned off to stop supply of the electric power from the battery to the power transmitter when the remaining battery charge becomes greater than or equal to the preset threshold value while the mobile terminal is being charged.

15. . A non-transitory computer-readable storage medium storing a program for causing a processor of a shopping cart to execute a process, the shopping cart including an attachment to which a mobile terminal is attachable, a battery, a power transmitter electrically connectable to the mobile terminal attached to the attachment and configured to transmit electric power from the battery to the mobile terminal, and a switch connected between the battery and the power transmitter, the process including:
determining a state of the mobile terminal attached to the attachment; and
turning on or off the switch to control supply of the electric power from the battery to the power transmitter based on the determined state of the mobile terminal.
